# EUROPÄISCHE PATENTSCHRIFT

(11) **EP 2 108 791 B1**
(45) Veröffentlichungstag und Bekanntmachung des Hinweises auf die Patenterteilung: **01.12.2010**
(21) Anmeldenummer: 09155683.7
(22) Anmeldetag: 20.03.2009
(51) Int. Cl.: F01N 1/06, F16L 55/033, G10K 11/178

(54) **Aktiver Schalldämpfer**
Active silencer
Silencieux actif

(30) Priorität: 09.04.2008 DE 102008018085
(43) Veröffentlichungstag der Anmeldung: 14.10.2009
(73) Patentinhaber: J. Eberspächer GmbH & Co. KG, 73730 Esslingen (DE)
(72) Erfinder: Krüger, Jan, 73730 Esslingen (DE); Wirth, Georg, 73230 Kirchheim/Teck (DE); Castor, Frank, 70469 Stuttgart (DE); Müller, Manfred, 73666 Baltmannsweiler (DE)
(74) Vertreter: BRP Renaud & Partner

(56) Entgegenhaltungen:
- EP-A- 0 939 393
- DE-B3-102006 042 224

## Beschreibung

Die vorliegende Erfindung betrifft einen aktiven Schalldämpfer für eine Abgasanlage einer Brennkraftmaschine, insbesondere eines Kraftfahrzeugs. Die Erfindung betrifft außerdem eine mit einem derartigen aktiven Schalldämpfer ausgestattete Abgasanlage für eine Brennkraftmaschine, insbesondere eines Kraftfahrzeugs.

Aktive Schalldämpfer arbeiten mit Gegenschall, der mittels wenigstens eines Lautsprechers aktiv erzeugt wird und durch Phasenverschiebung zur Auslöschung bzw. Dämpfung bestimmter Frequenzen genutzt werden kann, bspw. um die Schallemission durch eine Abgasanlage einer Brennkraftmaschine in die Umgebung zu reduzieren.

Aktive Schalldämpfer sind bspw. aus der US 5,600,106, aus der US 5,233,137, aus der EP 1 055 804, aus der US 5,336,856, aus der EP 0 755 045, aus der US 5,343,533, aus der EP 1 627 996, aus der US 4,177,874, aus der US 5,229,556, aus der US 5,432,857, aus der EP 0 674 097, aus der US 5,619,020, aus der EP 0 916 817, aus der DE 197 51 596, aus der EP 0 373 188 bekannt.

Problematisch bei aktiven Schalldämpfern bei Abgasanlagen von Brennkraftmaschinen ist zum einen die thermische Belastung des Lautsprechers durch die hohen Abgastemperaturen. Während herkömmliche Lautsprecher in einem Bereich von 100°C bis 200°C arbeiten können, betragen die Abgastemperaturen für gewöhnlich 400°C bis 700°C. Es ist daher ein erhöhter Aufwand erforderlich, um eine Überhitzung des Lautsprechers zu vermeiden. Ferner kann bei der Verwendung aktiver Schalldämpfer bei Abgasanlagen von Brennkraftmaschinen das im Betrieb anfallende Kondensat problematisch sein. Die Abgase einer Brennkraftmaschine können relativ feucht sein, so dass es an Flächen, die relativ zum Abgas kühl sind, bspw. kälter als 100°C, zur Kondensatbildung kommt. Insbesondere kann sich somit an einer Membran eines Lautsprechers Kondensat bilden. Sich am Lautsprecher ansammelndes Kondensat kann die Membran belasten, die Wirkung des Lautsprechers erheblich beeinträchtigen und bei Frost einfrieren, was letztlich zu einer Zerstörung des Lautsprechers führen kann. Ferner benötigt ein Lautsprecher ein vergleichsweise großes Rückvolumen, insbesondere dann, wenn in einem tieffrequenten Bereich vergleichsweise hohe Schalldruckpegel erzeugt werden sollen. Die Unterbringung eines vergleichsweise großen Rückvolumens kann jedoch zu erheblichen Bauraumproblemen führen, insbesondere bei Abgasanlagen von Fahrzeugen.

Die vorliegende Erfindung beschäftigt sich mit dem Problem, für einen aktiven Schalldämpfer der eingangs genannten Art sowie für eine damit ausgestattete Abgasanlage eine verbesserte Ausführungsform anzugeben, die sich insbesondere dadurch auszeichnet, dass die Gefahr einer Beschädigung des Schalldämpfers durch Überhitzung und/oder durch Kondensat reduziert ist, wobei außerdem ein vergleichsweise großes Rückvolumen realisiert werden soll.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, ein Gehäuse zur Unterbringung des Lautsprechers in Schalenbauweise mit zwei topfförmigen Schalen aufzubauen, wobei im Inneren des Gehäuses ein trichterförmiger Schall-Leitkörper untergebracht ist. Dieser Schall-Leitkörper ist einerseits mit einem Anschlussstutzen durch die Unterschale hindurch aus dem Gehäuse herausgeführt und dient andererseits zur Befestigung des Lautsprechers an einem Flanschabschnitt. Dabei ist ein den Flanschabschnitt umgehender Bypass vorgesehen, der eine kommunizierende Verbindung zwischen einem Innenraum der Oberschale und einem Innenraum der Unterschale ermöglicht. Somit bilden das Volumen des Unterschaleninnenraums außerhalb des Schall-Leitkörpers und das Volumen des Oberschaleninnenraums abgesehen vom Lautsprecher zusammen das Rückvolumen des Lautsprechers. Hierdurch kann bei einem vergleichsweise kompakten Aufbau ein relativ großes Rückvolumen für den Lautsprecher realisiert werden. Über den Schall-Leitkörper kann das heiße Abgas quasi von unten zur Membran des Lautsprechers gelangen, wodurch über den Schall-Leitkörper ein gewisser Mindestabstand realisiert wird, was eine direkte Beaufschlagung der Membran bzw. des Lautsprechers mit heißen Abgasen vermeidet. Gleichzeitig gewährleistet diese Einbausituation, dass Kondensat vergleichsweise einfach vom Lautsprecher bzw. von dessen Membran abfließen bzw. weggeführt werden kann, und zwar durch den Schall-Leitkörper. Die Anordnung des Lautsprechers zusammen mit dem Schall-Leitkörper in einem eigenen Gehäuse ermöglicht es außerdem, den aktiven Schalldämpfer besonders einfach an einer Abgasanlage so zu positionieren, dass eine Überhitzung des Lautsprechers vermieden werden kann. Beispielsweise lassen sich Mindestabstände von heißen, abgasführenden Leitungen besonders einfach einhalten. Darüber hinaus kann das Gehäuse am Fahrzeug besonders einfach so montiert werden, dass es im Betrieb des Fahrzeugs dem Fahrtwind ausgesetzt ist. Ferner bildet der Schalldämpfer eine unabhängig von der konkreten Einbausituation vorfertigbare Einheit, die quasi universell einsetzbar ist.

Besonders vorteilhaft ist eine Ausführungsform, bei welcher der Schall-Leitkörper im Einbauzustand des Schalldämpfers in seinem Inneren einen Ablauf bildet, der vom Flanschabschnitt zum Anschlussstutzen führt. Hierdurch kann Kondensat, das sich im Betrieb des Schalldämpfers, z. Bsp. abgasseitig an der Membran bilden kann, besonders einfach aus dem Schalldämpfer herausgeführt werden.

Besagter Ablauf kann insbesondere stufenlos und/oder hinterschnittfrei ausgestaltet werden, wodurch auch die Ansammlung von Wasser im Schalldämpfer und somit eine damit einhergehende Vereisungsgefahr reduziert werden.

Besonders vorteilhaft ist eine Ausführungsform, bei welcher das Gehäuse näherungsweise kugelförmig gestaltet ist. Beispielsweise können die Hauptabmessungen, nämlich Breite, Höhe und Länge des Gehäuses um weniger als 30% oder weniger als 25% oder weniger als 20% voneinander abweichen. Diese im Wesentlichen kugelförmige Gestalt des Gehäuses ergibt bei vergleichsweise kleiner Oberfläche ein relativ großes Volumen im Inneren des Gehäuses, das insbesondere als Rückvolumen für den Lautsprecher genutzt werden kann.

Bei einer anderen vorteilhaften Ausführungsform kann vorgesehen sein, den Flanschabschnitt radial außen mit mehreren, in Umfangsrichtung voneinander beabstandeten, radial vorstehenden Vorsprüngen auszustatten, die sich radial außen an einer Innenseite der Unterschale abstützen. Diese Abstützung kann insbesondere durch Formschluss und/oder Reibschluss so ausgestaltet werden, dass zur Befestigung des Schall-Leitkörpers im Gehäuse keine zusätzlichen, separaten Befestigungselemente, wie z. Bsp. Schrauben, erforderlich sind. Hierdurch können Wärmebrücken zwischen dem Gehäuse und dem Schall-Leitkörper vermieden werden, was die Wärmeübertragung auf den Lautsprecher reduziert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine Seitenansicht eines aktiven Schalldämpfers,
- Fig. 2: eine Seitenansicht wie in Fig. 1, jedoch bei transparentem Gehäuse,
- Fig. 3: eine Ansicht von unten auf den Schalldämpfer bei fehlender Unterschale,
- Fig. 4: eine perspektivische Ansicht des Schalldämpfers bei fehlender Oberschale,
- Fig. 5: eine perspektivische Ansicht einer Abgasanlage mit dem Schalldämpfer bei weggelassener Oberschale eines Verbindungsstücks.

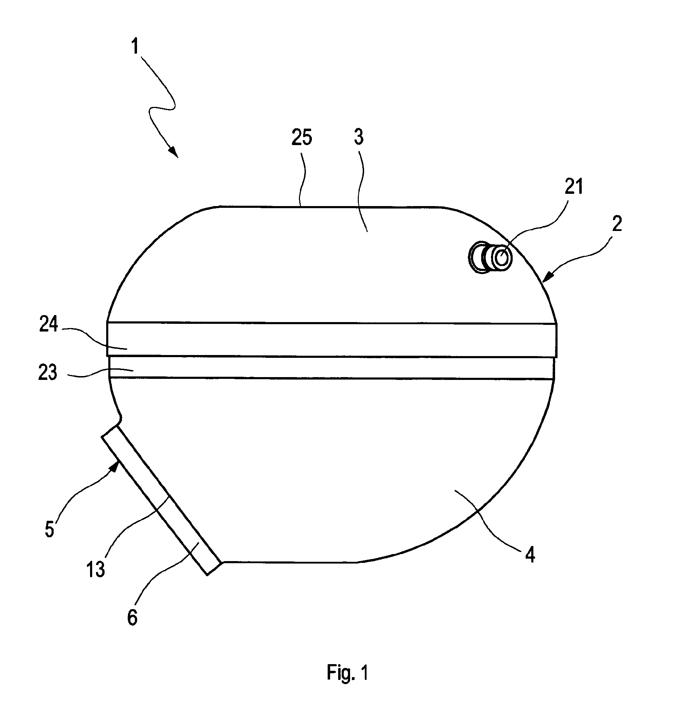

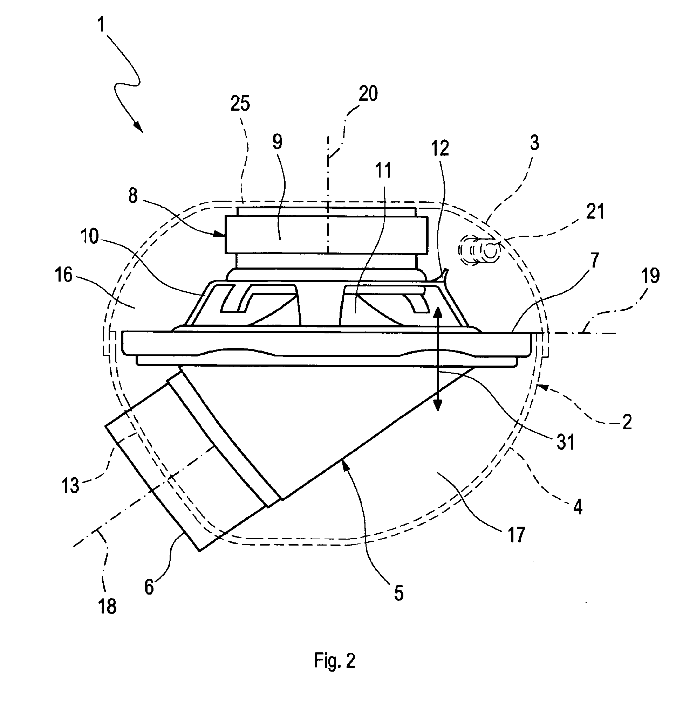

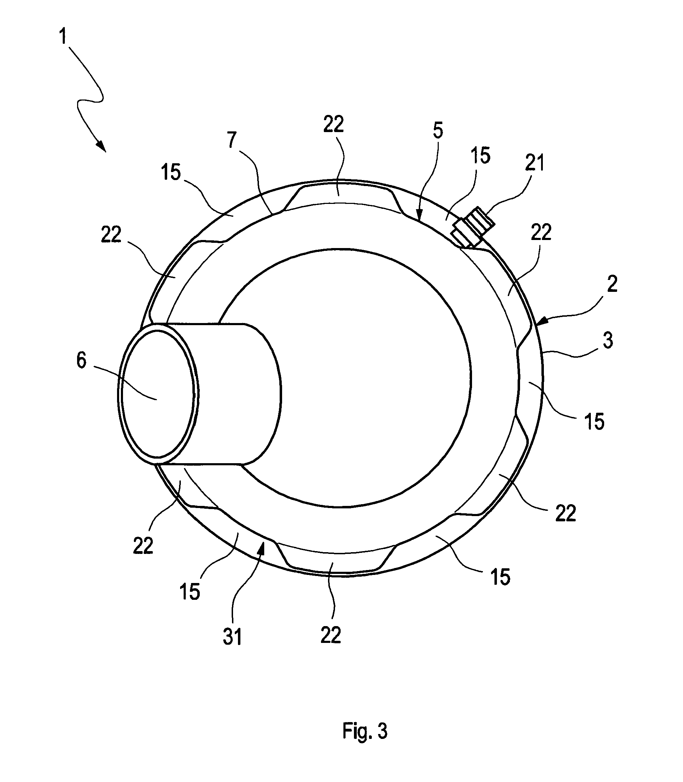

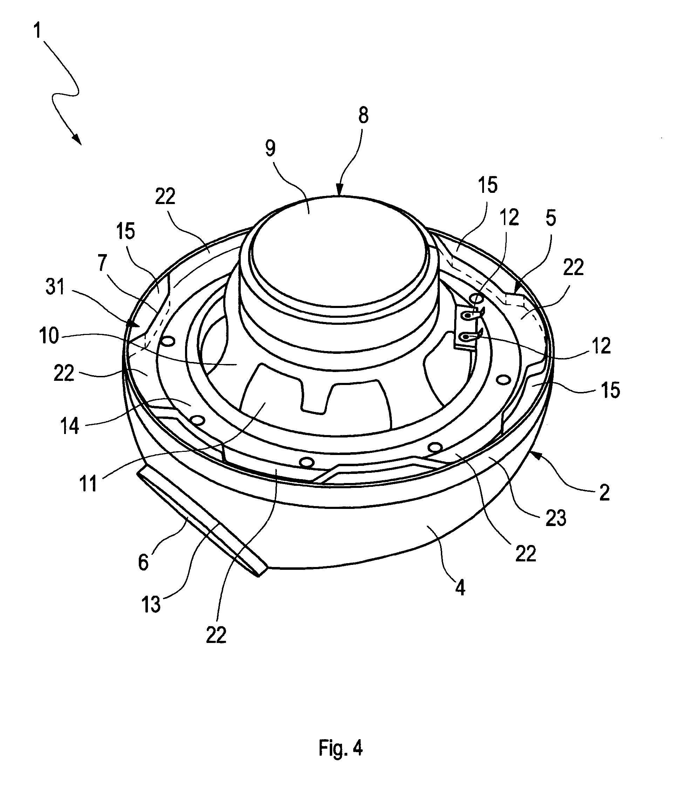

Entsprechend den Fig. 1 bis 4 umfasst ein aktiver Schalldämpfer 1 ein Gehäuse 2, das mehrschalig, bevorzugt zweischalig ausgestaltet ist und dementsprechend zumindest eine Oberschale 3 und eine Unterschale 4 aufweist. Oberschale 3 und Unterschale 4 sind jeweils topfförmig ausgestaltet. Insgesamt ergibt sich dadurch eine im Wesentlichen kugelförmige Gestalt für das Gehäuse 2.

Der Schalldämpfer 1 enthält in seinem Gehäuse 2 einen Schall-Leitkörper 5. Dieser ist trichterförmig ausgestaltet und besitzt einen Anschlussstutzen 6 und einen Flanschabschnitt 7. Der Anschlussstutzen 6 dient zum Anschließen des Schalldämpfers 1 an einen Raum oder an eine Leitung, in der sich Luftschall ausbreitet, der mit Hilfe des Schalldämpfers 1 aktiv bedämpft werden soll.

Für die aktive Schalldämpfung weist der Schalldämpfer 1 einen Lautsprecher 8 auf, der einen üblichen Aufbau besitzt. Dementsprechend weist der Lautsprecher 8 in üblicher Weise einen elektrodynamischen Wandler 9 auf, der an einem Korb 10 befestigt ist und eine Membran 11 zu Schwingungen anregen kann, die am Korb 10 aufgespannt ist. Am Lautsprecher 8 sind außerdem elektrische Anschlüsse 12 vorgesehen, über welche der Lautsprecher 8 elektrisch betätigbar ist.

Der Schall-Leitkörper 5 ist in die Unterschale 4 eingesetzt. Die Unterschale 4 besitzt eine Öffnung 13, durch welche der Anschlussstutzen 6 aus dem Gehäuse 2 herausgeführt ist. Somit durchsetzt der Anschlussstutzen 6 die Unterschale 4. Im Unterschied dazu ist der Lautsprecher 8 in der Oberschale 3 angeordnet und an einer vom Anschlussstutzen 6 abgewandten Seite am Flanschabschnitt 7 befestigt. Dabei ist der Lautsprecher 8 am Flanschabschnitt 7 derart angebracht, dass dadurch ein hier nicht näher bezeichneter, vom Flanschabschnitt 7 umschlossener, freier Innenquerschnitt des Schall-Leitkörpers 5 durch den Lautsprecher 8 bzw. durch dessen Membran 11 gasdicht verschlossen ist. Hierzu kann eine entsprechende, hier nicht dargestellte, Dichtung zwischen dem Flanschabschnitt 7 und einem Rand 14 des Lautsprecherkorbs 10 angeordnet sein, mit dem der Lautsprecher 8 am Schall-Leitkörper 5 befestigt ist.

Das Gehäuse 2 weist einen Bypass 31 auf, der den Flanschabschnitt 7 umgeht. Im gezeigten Beispiel weist der Flanschabschnitt 7 zur Realisierung des Bypasses 31 mehrere Ausnehmungen 15 auf. Diese Ausnehmungen 15 bilden Durchgangsöffnungen. Durch diese Durchgangsöffnungen 15 hindurch, also über den Bypass 31 ist ein Innenraum 16 der Oberschale 3 mit einem Innenraum 17 der Unterschale 4 kommunizierend verbunden. Der Innenraum 16 der Oberschale 3 umschließt dabei den Lautsprecher 8, während der Innenraum 17 der Unterschale 4 den Schall-Leitkörper 5 umschließt. Die beiden Innenräume 16, 17 bilden somit gemeinsam ein Rückvolumen für den Lautsprecher 8. Dieses Rückvolumen ist dabei gasdicht vom Inneren des Schall-Leitkörpers 5 getrennt, wodurch ein akustischer Kurzschluss vermieden wird.

Der Schall-Leitkörper 5 kann zweckmäßig als Ablauf für Kondensat genutzt werden, dass im Betrieb an der Membran 11 an der Abgasseite entstehen kann. Hierzu ist der Flanschabschnitt 5 in seinem nicht näher bezeichneten Inneren im Einbauzustand schräg angeordnet, wodurch sich daran ansammelnde Flüssigkeit schwerkraftbedingt nach unten abfließen kann. Im Beispiel besitzt der Anschlussstutzen 6 eine Längsmittelachse 18, die gegenüber einer Ebene 19, in welcher der Flanschabschnitt 7 liegt, um etwa 45° geneigt ist. Neigungswinkel zwischen dieser Längsmittelachse 18 und besagter Ebene 19 von einschließlich 30° bis einschließlich 60° ermöglichen eine besonders kompakte Bauweise für die Unterschale 4 und somit für das Gehäuse 2. Grundsätzlich sind jedoch auch Neigungswinkel bis 90° denkbar.

Der im Inneren des Schall-Leitkörpers 5 ausgebildete Ablauf ist vorzugsweise stufenlos und/oder hinterschnittfrei ausgestaltet. Hierdurch kann die Ansammlung von Wasser oder anderer Flüssigkeit im Inneren des Schall-Leitkörpers 5 und somit im Inneren des Gehäuses 2 vermieden werden. Die Gefahr einer Eisbildung innerhalb des Schalldämpfers 1 wird dadurch reduziert.

Wie bereits erläutert ist das Gehäuse 2 im Wesentlichen kugelförmig gestaltet. Erreicht wird dies bspw. durch vergleichsweise geringe Abweichungen bei den Abmessungen einer Breite des Gehäuses 2, einer Höhe des Gehäuses 2 und einer Länge des Gehäuses 2 voneinander. Beispielsweise weichen Breite, Höhe und Länge des Gehäuses 2 um weniger als 30%, insbesondere um weniger als 25% und vorzugsweise um weniger als 20% voneinander ab. Desweiteren kann das Gehäuse 2 bezüglich einer Hochachse 20, die senkrecht auf der Flanschebene 19 steht, im Wesentlichen rotationssymmetrisch ausgestaltet sein. Diese Rotationssymmetrie endet bei der Unterschale 4 am Bereich der Öffnung 13 und an der Oberschale 3 im Bereich eines Kabelanschlusses 21. Besagter Kabelanschluss 21 dient dazu, nicht gezeigte elektrische Kabel zum Betätigen des Lautsprechers 8 durch das Gehäuse 2 durchzuführen. Besonders vorteilhaft ist dabei eine Ausgestaltung, bei welcher dieser Kabelanschluss 21 so ausgestaltet ist, dass er zusätzlich zur Kabeldurchführung außerdem einen Druckausgleich zwischen dem Innenraum 16 der Oberschale 16 und einer Umgebung des Gehäuses 2 ermöglicht. Hierdurch erhält der Kabelanschluss 21 eine Doppelfunktion. Alternativ ist es ebenso möglich, in der Oberschale 3 und/oder in der Unterschale 4 zumindest eine hier nicht dargestellte Druckausgleichsöffnung anzubringen, die insbesondere spritzwassergeschützt sein kann. Bspw. kann eine solche Druckausgleichsöffnung mit Hilfe einer gasdurchlässigen, jedoch für Flüssigkeit undurchlässigen Membran verschlossen sein.

Für den Fall, dass bei einer besonderen Einbausituation die Nutzung des Schall-Leitkörpers 5 als Ablauf nicht möglich sein sollte, kann der Schalldämpfer 1 zusätzlich mit einem Saugrohr ausgestattet werden, das eine Absaugung von Kondensat aus dem Inneren des Schall-Leitkörpers 5 ermöglicht. Eine derartige Ausführungsform ist hier jedoch nicht dargestellt.

Der Flanschabschnitt 7 besitzt radial außen mehrere Vorsprünge 22. Diese sind in Umfangsrichtung voneinander beabstandet und stehen radial gegenüber dem übrigen Flanschabschnitt 7 vor. Über diese Vorsprünge 22 kann sich der axial in die Unterschale 4 eingesetzte Schall-Leitkörper 5 radial außen an einer nicht näher bezeichneten Innenseite der Unterschale 4 abstützen. Dabei ist es grundsätzlich möglich, den Flanschabschnitt 7 in die Unterschale 4 einzupressen, derart, dass sich die genannten Vorsprünge 22 mit radialer Vorspannung an der Unterschale 4 radial abstützen. Hierdurch kann eine rein reibschlüssige bzw. kraftschlüssige Fixierung für den Schall-Leitkörper 5 in bzw. an der Unterschale 4 realisiert werden. Zusätzlich oder alternativ ist es ebenso möglich, einen Randabschnitt 23 der Unterschale 4 mit einer hier nicht gezeigten Stufe zu versehen, an welcher die Vorsprünge 22 axial zur Anlage kommen können. Hierdurch kann eine formschlüssige Fixierung des Schall-Leitkörpers 5 in bzw. an der Unterschale 4 realisiert werden.

Erkennbar sind zur Ausbildung des Bypasses 31 die Ausnehmungen 15 bzw. die Durchgangsöffnungen 15 jeweils zwischen zwei in Umfangsrichtung benachbarten Vorsprüngen 22 angeordnet bzw. durch die Abstände zwischen benachbarten Vorsprüngen 22 gebildet.

Bei der hier gezeigten Ausführungsform ist die Oberschale 3 auf die Unterschale 4 axial aufgesteckt. Hierzu übergreift ein Randabschnitt 24 der Oberschale 3 den zuvor genannten Randabschnitt 23 der Unterschale 4 radial außen. Desweiteren können hier nicht gezeigte, geeignete Schnellbefestigungsmittel vorgesehen sein, um die Oberschale 3 an der Unterschale 4 zu fixieren.

Die Oberschale 3 weist im gezeigten Beispiel einen ebenen Bodenabschnitt 25 auf. Zweckmäßig sind die Dimensionen der Oberschale 3 und des Lautsprechers 8 so aufeinander abgestimmt, dass der Lautsprecher 8 insbesondere flächig am Bodenabschnitt 25 abgestützt ist, wenn die Oberschale 3 das Gehäuse 2 verschließt.

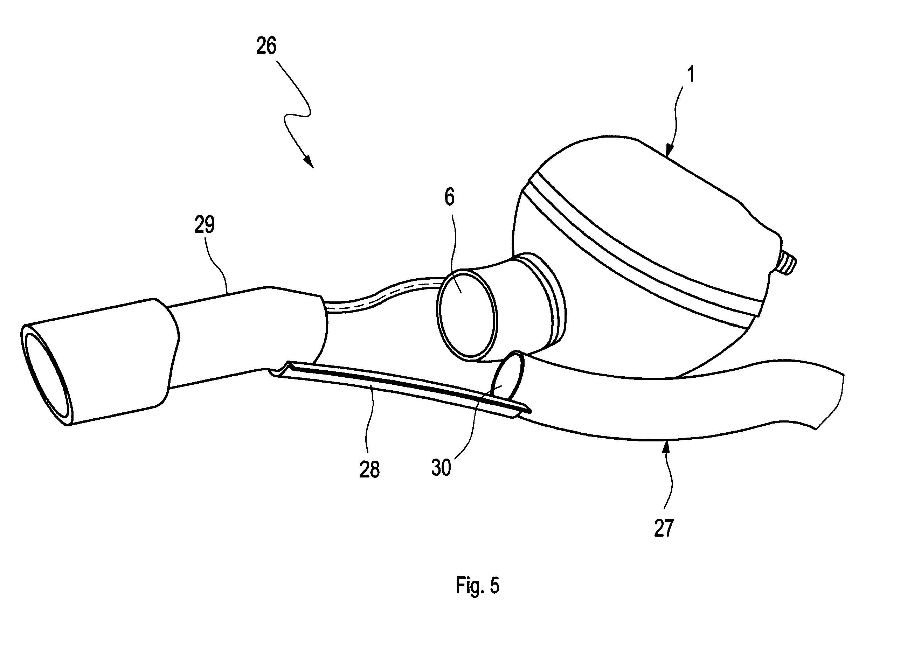

Entsprechend Fig. 5 umfasst eine Abgasanlage 26, die hier nur teilweise dargestellt ist und die bei einer Brennkraftmaschine zum Abführen von deren Abgasen zum Einsatz kommt, zumindest einen solchen aktiven Schalldämpfer 1 sowie eine abgasführende Leitung 27 auf. Der Schalldämpfer 1 ist mit seinem Anschlussstutzen 6 an die Leitung 27 angeschlossen. Hierzu weist die Abgasleitung 27 ein Verbindungsstück 28 auf, das hier geschnitten bzw. nur zur Hälfte dargestellt ist. Das Verbindungsstück 28 ist im Wesentlichen Y-förmig gestaltet und verbindet die Leitung 27 mit einem Endrohr 29 und ermöglicht außerdem den Anschluss des Schalldämpfers 1. Bei der hier gezeigten Ausführungsform ist der Schalldämpfer 1 an die Abgasanlage 26 so angeschlossen, dass der Anschlussstutzen 6 im Wesentlichen in die gleiche Richtung orientiert ist wie ein Ende 30 der Leitung 27. Hierdurch können ein direktes Einströmen heißer Abgase in den Anschlussstutzen 6 und somit eine direkte Beaufschlagung des Lautsprechers 8 mit heißen Abgasen vermieden werden.

Im gezeigten Beispiel befindet sich der Schalldämpfer 1 relativ nahe am Endrohr 29, so dass es sich hierbei um einen so genannten Nachschalldämpfer handelt. Der Schalldämpfer 1 kann an einem Fahrzeugboden zweckmäßig so montiert werden, dass er einem Fahrtwind ausgesetzt ist. Zusätzlich können am Fahrzeugboden Strömungsleitelemente angebracht werden, die eine direkte Beaufschlagung des Gehäuses 2 mit Fahrtwind begünstigen.

Die Montage bzw. Anordnung des Schalldämpfers 1 an der Abgasanlage 26 erfolgt zweckmäßig so, dass das Gehäuse 2 einen vorbestimmten Mindestabstand von ca. 10 mm bis 20 mm gegenüber einer abgasführenden Leitung, hier gegenüber der Abgasleitung 27 einhält. Darüber hinaus besitzt der Anschlussstutzen 6 eine Mindestlänge, die bspw. zwischen 100 mm und 200 mm liegen kann. Durch diese Maßnahmen kann eine Überhitzung des Lautsprechers 8 vermieden werden.

Bei den Gehäuseschalen 3, 4, kann es sich bspw. um Kunststoffteile handeln. Ebenso kann es sich hierbei um Blechformteile aus Metall handeln. Beim Schall-Leitkörper 5 handelt es sich bevorzugt um ein Blechformteil aus Metall. Hierbei kann der Schall-Leitkörper 5 aus mehreren Einzelteilen zusammengesetzt sein. Ebenso ist eine einstückig hergestellte Variante denkbar. Besonders vorteilhaft ist dabei eine Ausgestaltung, bei der das Gehäuse 2 aus genau drei oder vier Teilen zusammengebaut ist, nämlich aus der Oberschale 3, der Unterschale 4 und dem Schall-Leitkörper 5 sowie gegebenenfalls dem Anschlussstutzen 6. Hierdurch baut das Gehäuse 2 extrem preiswert.

## Patentansprüche

1. Aktiver Schalldämpfer für eine Abgasanlage (26) einer Brennkraftmaschine, insbesondere eines Kraftfahrzeugs,
- mit einem mehrschaligen Gehäuse (2), das eine topfförmige Oberschale (3) und eine topfförmige Unterschale (4) aufweist,
- mit einem trichterförmigen Schall-Leitkörper (5), der in die Unterschale (4) eingesetzt ist und einen durch die Unterschale (4) hindurch aus dem Gehäuse (2) herausgeführten Anschlussstutzen (6) aufweist,
- mit einem Lautsprecher (8), der in der Oberschale (3) angeordnet ist und an einem vom Anschlussstutzen (6) entfernten Flanschabschnitt (7) des Schall-Leitkörpers (5) befestigt ist, derart, dass ein vom Flanschabschnitt (7) umschlossener freier Innenquerschnitt des Schall-Leitkörpers (5) gasdicht verschlossen ist,
- mit einem Bypass (31), durch den ein Innenraum (16) der Oberschale (3) mit einem Innenraum (17) der Unterschale (4) kommunizierend verbunden ist.

2. Schalldämpfer nach Anspruch 1,
**dadurch gekennzeichnet,**
**dass** der Bypass (31) durch Ausnehmungen (13) gebildet ist, die der Flanschabschnitt (7) aufweist.

3. Schalldämpfer nach Anspruch 1 oder 2,
**dadurch gekennzeichnet,**
**dass** der Schall-Leitkörper (5) im Einbauzustand des Schalldämpfers (1) in seinem Inneren einen vom Flanschabschnitt (7) zum Anschlussstutzen (6) führenden Ablauf bildet.

4. Schalldämpfer nach Anspruch 3,
**dadurch gekennzeichnet,**
**dass** der Ablauf stufenlos und/oder hinterschnittfrei ausgestaltet ist.

5. Schalldämpfer nach einem der Ansprüche 1 bis 4,
**dadurch gekennzeichnet,**
**dass** das Gehäuse (2) kugelförmig gestaltet ist, derart, dass Breite, Höhe und Länge des Gehäuses (2) weniger als 30% oder weniger als 20% voneinander abweichen.

6. Schalldämpfer nach einem der Ansprüche 1 bis 5,
**dadurch gekennzeichnet,**
**dass** der Flanschabschnitt (7) außen mehrere in Umfangsrichtung voneinander beabstandete, radial vorstehende Vorsprünge (22) aufweist, die sich radial außen an einer Innenseite der Unterschale (4) abstützen.

7. Schalldämpfer nach den Ansprüchen 2 und 6,
**dadurch gekennzeichnet,**
**dass** je eine der Ausnehmungen (15) zwischen zwei in Umfangsrichtung benachbarten Vorsprüngen (22) angeordnet ist.

8. Schalldämpfer nach Anspruch 6 oder 7,
**dadurch gekennzeichnet,**
**dass** der Flanschabschnitt (7) in die Unterschale (4) eingepresst ist, so dass sich die Vorsprünge (22) radial vorgespannt an der Unterschale (4) abstützen.

9. Schalldämpfer nach einem der Ansprüche 1 bis 8,
**dadurch gekennzeichnet,**
**dass** die Oberschale (3) mit einem Randabschnitt (24) außen auf einen Randabschnitt (23) der Unterschale (4) aufgesteckt ist.

10. Schalldämpfer nach einem der Ansprüche 1 bis 9,
**dadurch gekennzeichnet,**
**dass** die Oberschale (3) einen ebenen Bodenabschnitt (25) aufweist, an dem der Lautsprecher (8) abgestützt ist.

11. Schalldämpfer nach einem der Ansprüche 1 bis 10,
**dadurch gekennzeichnet,**
**dass** die Oberschale (3) einen Kabelanschluss (21) aufweist, durch den Kabel zum elektrischen Betätigen des Lautsprechers (8) durchführbar sind und der so ausgestaltet ist, dass er einen Druckausgleich zwischen dem Innenraum (16) der Oberschale (3) und einer Umgebung des Gehäuses (2) ermöglicht.

12. Abgasanlage für eine Brennkraftmaschine, insbesondere eines Kraftfahrzeugs, mit einer abgasführenden Leitung (27), an die wenigstens ein aktiver Schalldämpfer (1) nach einem der Ansprüche 1 bis 11 angeschlossen ist.

## Claims

1. An active muffler for an exhaust gas system (26) of an internal combustion engine, in particular in a motor vehicle, comprising
- a multi-shell housing (2) having a pot-shaped top shell (3) and a pot-shaped bottom shell (4),
- a funnel-shaped sound conducting body (5) which is inserted into the bottom shell (4) and has a connection (6) passing through the bottom shell (4) and out of the housing (2),
- a loudspeaker (8), which is situated in the top shell (3) and is attached to a flange section (7) of the sound conducting body (5), flange section (7) at a distance from the connection (6), such that a free inside cross section of the sound conducting body (5) surrounded by the flange section (7) is closed with an airtight seal,
- a bypass (31) through which an interior space (16) of the top shell (3) is connected to an interior space (17) of the bottom shell (4) so they communicate.

2. The muffler according to Claim 1,
**characterized in that**
the bypass (31) is formed by recesses (13) in the flange section (7).

3. The muffler according to Claim 1 or 2
**characterized in that**
in the installed state of the muffler (1), the sound conducting body (5) forms a drain leading from the flange section (7) to the connection (6) in its interior.

4. The muffler according to Claim 3,
**characterized in that**
the drain is designed to be without steps and/or undercuts.

5. The muffler according to any one of Claims 1 to 4,
**characterized in that**
the housing (2) is designed to be spherical, such that the height, width and length of the housing (2) deviate from one another by less than 30% or less than 20%.

6. The muffler according to any one of Claims 1 to 5,
**characterized in that**
the flange section (7) has several protrusions (22) extending radially on the outside and spaced a distance apart from one another in the circumferential direction, supported on an inside of the bottom shell (4) on the outside radially.

7. The muffler according to Claims 2 and 6,
**characterized in that**
one of the recesses (15) is arranged between two neighboring protrusions (22) in the circumferential direction.

8. The muffler according to Claim 6 or 7,
**characterized in that**
the flange section (7) is pressed into the bottom shell (4), so that the protrusions (22) are supported on the bottom shell (4) with radial prestress.

9. The muffler according to any one of Claims 1 to 8,
**characterized in that**
the top shell (3) with an edge section (24) on the outside is placed on an edge section (23) of the bottom shell (4).

10. The muffler according to any one of Claims 1 to 9,
**characterized in that**
the top shell (3) has a planar bottom section (25) on which the loudspeaker (8) is supported.

11. The muffler according to any one of Claims 1 to 10,
**characterized in that**
the top shell (3) has a cable connection (21) by which cables for electric operation of the loudspeaker (8) can be fed through and which is embodied so that it allows an equalization of pressure between the interior (16) of the top shell (3) and the environment of the housing (2).

12. The exhaust gas system for an internal combustion engine, in particular a motor vehicle, having a line (27) carrying exhaust gas, to which at least one active muffler (1) is connected according to any one of Claims 1 to 11.

## Revendications

1. Silencieux actif pour un système d'échappement (26) d'un moteur à combustion interne, en particulier d'un véhicule automobile, comprenant
- un boîtier (2) multicouches, qui présente une coque supérieure (3) en forme de pot et une coque inférieure (4) en forme de pot,
- un corps à conduction acoustique (5) en forme d'entonnoir, qui est inséré dans la coque inférieure (4) et présente une tubulure de raccordement (6) guidée à la sortie du boîtier (2) à travers la coque inférieure (4),
- un haut-parleur (8), qui est disposé sur la coque supérieure (3) et est fixé sur une partie bride (7), éloignée de la tubulure de raccordement (6), du corps à conduction acoustique (5), de telle sorte qu'une section intérieure libre, entourée par la partie bride (7), du corps à conduction acoustique (5) est fermée de façon étanche au gaz,
- un by-pass (31), par lequel un espace intérieur (16) de la coque supérieure (3) est relié de manière à communiquer à un espace intérieur (17) de la coque inférieure (4).

2. Silencieux selon la revendication 1,
**caractérisé en ce que**
le by-pass (31) est formé par des évidements (13) que la partie bride (7) présente.

3. Silencieux selon la revendication 1 ou 2,
**caractérisé en ce que**
le corps à conduction acoustique (5) forme, lorsque le silencieux (1) est monté dans son intérieur, un écoulement allant de la partie bride (7) à la tubulure de raccordement (6).

4. Silencieux selon la revendication 3,
**caractérisé en ce que**
l'écoulement est conçu de façon continue et/ou sans contre-dépouille.

5. Silencieux selon l'une quelconque des revendications 1 à 4,
**caractérisé en ce que**
le boîtier (2) est conçu avec une forme sphérique de telle sorte que la largeur, la hauteur et la longueur du boîtier (2) s'écartent de moins de 30 % ou de moins de 20 % les unes des autres.

6. Silencieux selon l'une quelconque des revendications 1 à 5,
**caractérisé en ce que**
la partie bride (7) présente à l'extérieur plusieurs saillies (22) espacées les unes des autres dans le sens périphérique et dépassant radialement, qui s'appuient radialement à l'extérieur sur un côté intérieur de la coque inférieure (4).

7. Silencieux selon les revendications 2 et 6 **caractérisé en ce que**
à chaque fois un des évidements (15) est disposé entre deux saillies (22) voisines dans le sens périphérique.

8. Silencieux selon la revendication 6 ou 7 **caractérisé en ce que**
la partie bride (7) est enfoncée dans la coque inférieure (4), de sorte que les saillies (22) s'appuient radialement de façon prétendue sur la coque inférieure (4).

9. Silencieux selon l'une quelconque des revendications 1 à 8
**caractérisé en ce que**
la coque supérieure (3) est emboîtée avec une partie de bord (24) à l'extérieur sur une partie de bord (23) de la coque inférieure (4).

10. Silencieux selon l'une quelconque des revendications 1 à 9
**caractérisé en ce que**
la coque supérieure (3) présente une partie de fond (25) plane sur laquelle le haut-parleur (8) est soutenu.

11. Silencieux selon l'une quelconque des revendications 1 à 10
**caractérisé en ce que**
la coque supérieure (3) présente un raccordement de câble (21) par lequel des câbles peuvent être passés pour l'actionnement électrique du haut-parleur (8) et qui est conçu de telle sorte qu'il permet un équilibre de pression entre l'intérieur (16) de la coque supérieure (3) et un environnement du boîtier (2).

12. Système d'échappement pour un moteur à combustion interne, en particulier d'un véhicule automobile, comprenant une conduite (27) véhiculant des gaz brûlés à laquelle est raccordé au moins un silencieux (1) actif selon l'une quelconque des revendications 1 à 11.
